# EUROPÄISCHE PATENTSCHRIFT

(11) **EP 1 050 492 B1**
(45) Veröffentlichungstag und Bekanntmachung des Hinweises auf die Patenterteilung: **06.10.2004**
(21) Anmeldenummer: 00810255.0
(22) Anmeldetag: 24.03.2000
(51) Int. Cl.: B65G 17/08, B65G 23/06

(54) **Fördereinrichtung mit einem modularen Förderband und mindestens einem Antriebszahnrad**
CONVEYING DEVICE WITH A MODULAR CONVEYOR BELT AND AT LEAST ONE DRIVING SPROCKET WHEEL
DISPOSITIF DE TRANSPORT AVEC UN CONVOYEUR A BANDE MODULAIR ET AU MOINS UNE ROUE A DENTS ENTRAINEE

(30) Priorität: 05.05.1999 CH 83799
(43) Veröffentlichungstag der Anmeldung: 08.11.2000
(73) Patentinhaber: Habasit AG, CH-4153 Reinach (CH)
(72) Erfinder: Guldenfels, Dieter, 4148 Pfeffingen (CH); Rolle, Felix, 4132 Muttenz (CH)
(74) Vertreter: Bollhalder, Renato

(56) Entgegenhaltungen:
- EP-A- 0 113 909
- GB-A- 1 199 151
- GB-A- 2 309 062
- US-A- 5 826 705

## Beschreibung

Die vorliegende Erfindung bezieht sich auf eine Fördereinrichtung mit einem modularen Förderband und mindestens einem Antriebszahnrad, wie sie im Oberbegriff des unabhängigen Patentanspruchs 1 definiert ist.

Bekannte modulare Förderbänder sind aus mehreren Modulen zusammengesetzt, die jeweils einen plattenartigen Modulkörper und eine erste und zweite Serie von Gelenkaugenelementen aufweisen, die von zwei gegenüberliegenden Seiten des Modulkörpers vorstehen. Jedes dieser Gelenkaugenelemente umfasst ein Gelenkauge, wobei die Gelenkaugen jeder der beiden Gelenkaugenelementserien zur Aufnahme eines durchgehenden Gelenkstabs ausgerichtet sind. Zwei benachbarte Module greifen ineinander und sind durch einen Gelenkstab, der die Gelenkaugen der einen Gelenkaugenelementserie des einen Moduls und die Gelenkaugen der einen Gelenkaugenelementserie des anderen Moduls durchquert, aneinandergelenkt. Die Module werden normalerweise versetzt zueinander angeordnet, so dass ein Förderband gewünschter Länge und Breite gebildet werden kann. Das Fördergut wird auf Förderflächen der Modulkörper und der Gelenkaugenelemente transportiert.

Bei gewissen Anwendungen, besonders in der lebensmittelverarbeitenden Industrie, ist eine Förderbandkonstruktion gefordert, die leicht gereinigt werden kann. Ein modulares Förderband dieser Art ist beispielsweise in der US-A-4 925 016 beschrieben. Zum Antreiben des Förderbands ist auf der Unterseite der Modulkörper jeweils quer zur Förderrichtung eine Querrippe angeordnet. Auf Längsrippen wurde verzichtet, um eine gute Reinigung zu gewährleisten. Mit mehreren parallel und beabstandet zueinander angeordneten Antriebszahnrädern, die Antriebszähne aufweisen, die an den Querrippen ansetzen, wird das Förderband angetrieben. Neben diesen Antriebszähnen sind auf den Antriebszahnrädern noch Führungszähne vorgesehen, die jeweils in die Lücke zwischen zwei benachbarten Gelenkaugenelementen ineinandergreifender Module greifen und so das modulare Förderband seitlich führen.

Diese aus der US-A-4 925 016 bekannte Fördereinrichtung hat den Nachteil, dass die Antriebszahnräder zusätzlich zu den Antriebszähnen noch Führungszähne aufweisen, also konstruktiv relativ aufwendig sind. Die zusätzlichen Führungszähne erschweren ausserdem die Reinigung und es besteht das Risiko, dass sie auf die Förderbandunterseite gelangendes Fördergut in den schmalen Zwischenraum zwischen zwei benachbarten Gelenkaugenelementen pressen, von wo es nur sehr schlecht wieder entfernt werden kann.

In der GB-A-2 309 062 ist eine Fördereinrichtung offenbart, bei der die Module des Förderbands und die Antriebszahnräder derart ausgebildet und angeordnet sind, dass die Zähne beim Antreiben des Förderbands jeweils zwischen zwei benachbarte Gelenkaugenelemente eines Moduls greifen, um direkte seitliche Führungen für diese beiden Gelenkaugenelemente zu bilden. Pro Modul greift jeweils nur ein Zahn eines Antriebszahnrads zwischen zwei benachbarte Gelenkaugenelemente, was eine oft unzureichende Stabilität ergibt.

Angesichts der Nachteile der bisher bekannten, oben beschriebenen modularen Förderbänder und Antriebszahnräder liegt der Erfindung die folgende Aufgabe zugrunde. Zu schaffen ist eine Fördereinrichtung der eingangs erwähnten Art, bei der das Antriebszahnrad oder die Antriebszahnräder, das oder die sowohl zum Antreiben als auch zum Führen des modularen Förderbands dienen, möglichst einfach aufgebaut ist bzw. sind. Dabei soll das Förderband möglichst stabil geführt sein. Ferner sollen das Förderband und das oder die Antriebszahnräder leicht zu reinigen sein.

Diese Aufgabe wird durch die erfindungsgemässe Fördereinrichtung gelöst, wie sie im unabhängigen Patentanspruch 1 definiert ist. Bevorzugte Ausführungsvarianten ergeben sich aus den abhängigen Patentansprüchen.

Die Erfindung betrifft eine Fördereinrichtung mit einem modularen Förderband, das aus mehreren Modulen zusammengesetzt ist, und mit mindestens einem Antriebszahnrad. Die Module weisen jeweils einen plattenartigen Modulkörper und eine erste und zweite Serie von Gelenkaugenelementen auf, die von zwei gegenüberliegenden Seiten des Modulkörpers vorstehen und jeweils ein Gelenkauge umfassen. Zwei benachbarte Module greifen ineinander und sind durch einen Gelenkstab, der die Gelenkaugen der einen Gelenkaugenelementserie des einen Moduls und die Gelenkaugen der einen Gelenkaugenelementserie des andern Moduls durchquert, aneinandergelenkt. Das mindestens eine Antriebszahnrad weist Zähne zum Antreiben des Förderbands auf. Das Wesen der Erfindung besteht nun darin, dass die Module und das mindestens eine Antriebszahnrad derart ausgebildet und angeordnet sind, dass die Zähne beim Antreiben des Förderbands jeweils zwischen zwei benachbarte Gelenkaugenelemente eines Moduls greifen, um direkte seitliche Führungen für diese beiden Gelenkaugenelemente zu bilden. Dabei weist das mindestens eine Antriebszahnrad zwei Serien über den Umfang verteilter Zähne auf, wobei die Zähne der einen Serie und die Zähne der anderen Serie seitlich und in Umfangsrichtung zueinander versetzt angeordnet sind.

Dank der Erfindung können die Antriebszahnräder einfacher hergestellt werden als bei den bisher bekannten Fördereinrichtungen mit modularen Förderbändern, die Module mit plattenartigen Modulkörpern aufweisen. Anstatt von separaten Antriebs- und Führungszähnen werden sowohl die Antriebs- als auch die Führungsfunktion von denselben Zähnen wahrgenommen. Da diese Zähne nicht in die Lücke zwischen zwei benachbarten Gelenkaugenelementen ineinandergreifender Module greifen, wird die Gefahr des in die Lücke Pressens auf die Förderbandunterseite gelangenden Förderguts stark vermindert. Dadurch, dass das mindestens eine Antriebszahnrad zwei Serien über den Umfang verteilter Zähne aufweist, wobei die Zähne der einen Serie und die Zähne der anderen Serie seitlich und in Umfangsrichtung zueinander versetzt angeordnet sind, kann beim Antreiben des Förderbands jeweils mehr als ein Zahn mit einem Modul in Eingriff gebracht werden, was die Führungsstabilität erhöht.

Es ist ausserdem möglich, dieselben Antriebszahnräder sowohl für modulare Förderbänder mit geschlossenen Förderflächen als auch mit mit öffnungen versehenen, z.B. gitterartigen Förderflächen zu verwenden. Eine einzige Antriebszahnrad-Form genügt für alle Bandtypen mit gleichem Pitch. Somit ist eine kostengünstige Lösung mit einfacher Lagerhaltung geschaffen.

Da auf der Unterseite des modularen Förderbands neben den Gelenkaugenelementen und den bei manchen Ausführungsvarianten vorhandenen Querrippen keine zusätzlichen Elemente zur Bandführung, wie z.B. Rippen oder Noppen, vorhanden sind, ist es auch leicht zu reinigen.

Im folgenden wird die erfindungsgemässe Fördereinrichtung unter Bezugnahme auf die beigefügten Zeichnungen anhand zweier Ausführungsbeispiele detaillierter beschrieben. Es zeigen:

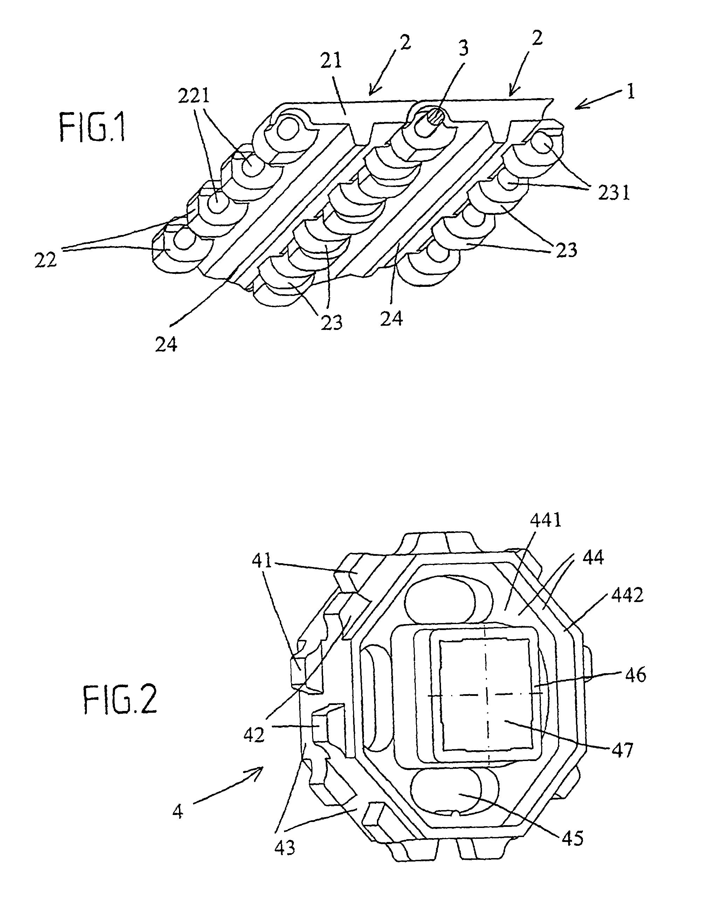

- Fig. 1 -: eine Perspektivansicht von schräg unten zweier mit einem Gelenkstab verbundener Module eines ersten Ausführungsbeispiels eines erfindungsgemässen modularen Förderbands;
- Fig. 2 -: eine Perspektivansicht eines erfindungsgemässen Antriebszahnrads;

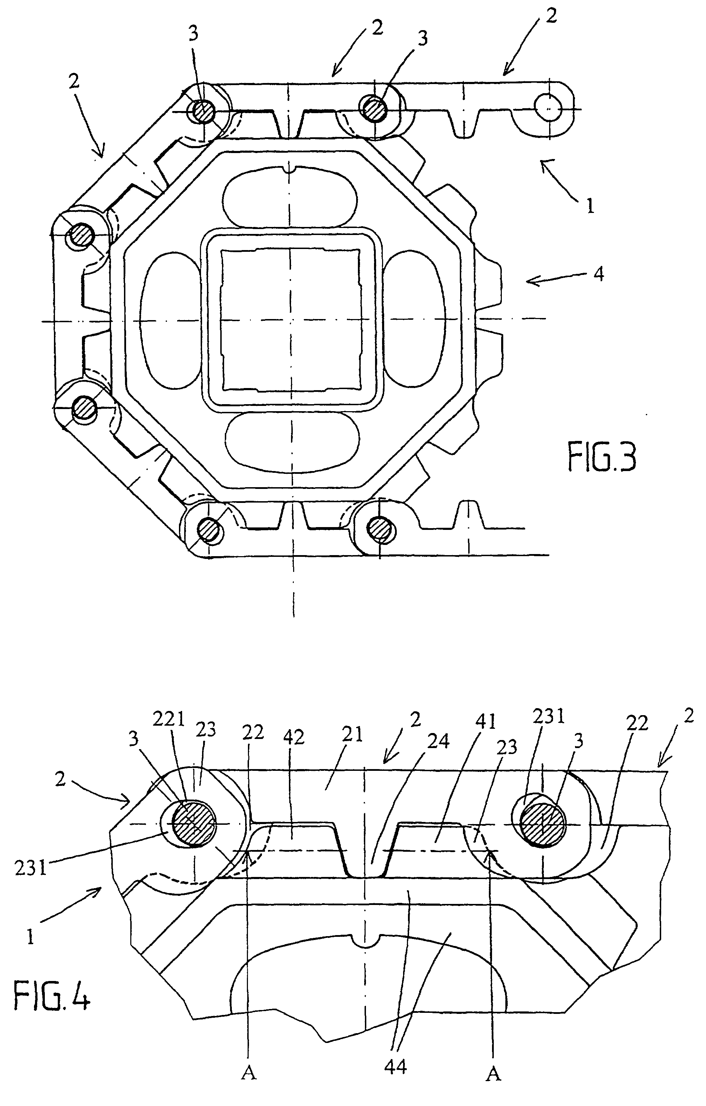

- Fig. 3 -: das Antreiben und Führen des modularen Förderbands von Fig. 1 mit dem Antriebszahnrad von Fig. 2;

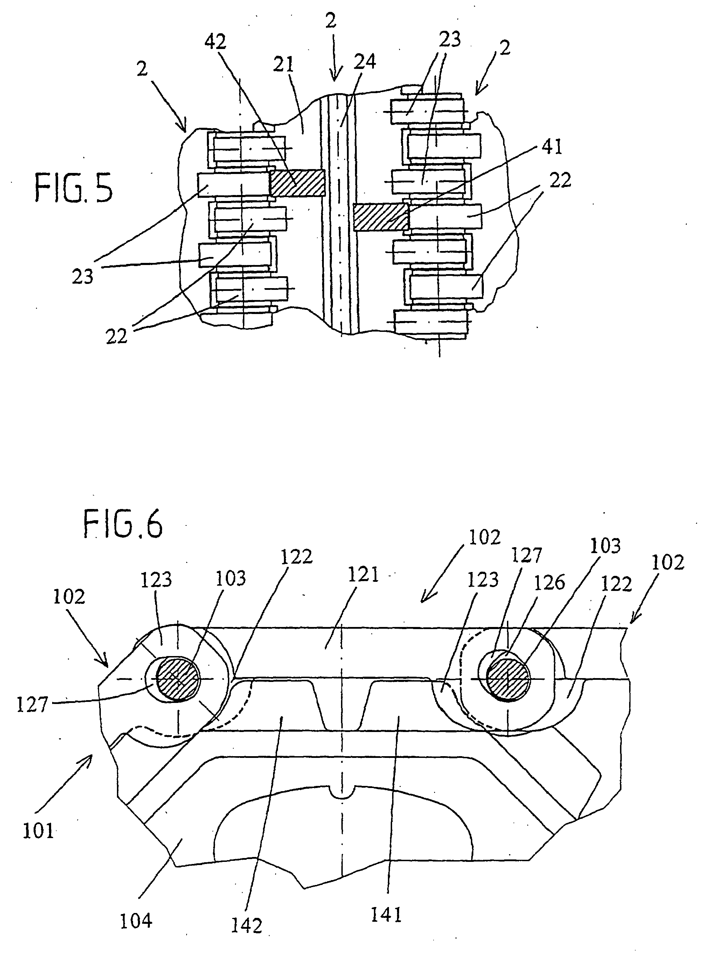

- Fig. 4 -: ein vergrösserter Ausschnitt aus Fig. 3;
- Fig. 5 -: eine Ansicht von unten eines Teils des modularen Förderbands von Fig. 4 mit gemäss der Linie A-A geschnittenen Zähnen des Antriebszahnrads und
- Fig. 6 -: das Antreiben und Führen eines modularen Förderbands mit einem Antriebszahnrad gemäss einem zweiten Ausführungsbeispiel.

### Figur 1

Der dargestellte Teil eines modularen Förderbands 1 setzt sich aus zwei ineinandergreifenden Modulen 2 zusammen, die mittels eines Gelenkstabs 3 aneinandergelenkt sind. Jedes Modul 2 weist einen Modulkörper 21, eine erste und zweite Serie von Gelenkaugenelementen 22, 23, die von zwei gegenüberliegenden Seiten des Modulkörpers 21 vorstehen und jeweils ein Gelenkauge 221, 231 in Form eines Langlochs umfassen, sowie eine auf der Unterseite des Modulkörpers 21 quer zur Förderrichtung angeordnete Querrippe 24 auf. Ein Teil der Gelenkaugenelemente 22, 23 erstreckt sich jeweils direkt an der Unterseite des Modulkörpers 21. Die Gelenkaugen 221, 231 jeder der beiden Gelenkaugenelementserien 22, 23 sind aufeinander ausgerichtet und ungefähr in einem Winkel von 45° zur Förderfläche angeordnet, so dass der Gelenkstab 3 die Gelenkaugen 231 der einen Gelenkaugenelementserie 23 des einen Moduls 2 und die Gelenkaugen 221 der einen Gelenkaugenelementserie 22 des andern Moduls 2 durchqueren kann und von den beiden Gelenkaugenelementserien 22, 23 fixiert wird.

Die Gelenkaugenelemente 22, 23 sind in ihrem oberen Teil deutlich breiter als in ihrem unteren, das Gelenkauge 221, 231 aufweisenden Teil, so dass benachbarte Gelenkaugenelemente 22, 23 ineinandergreifender Module 2 im oberen Bereich praktisch lückenlos aneinandergrenzen. Die Oberseite der Module 2 ist ausserdem flach ausgebildet, was eine ebene, im wesentlichen fast vollständig geschlossene Förderfläche ergibt.

Die Querrippen 24 erstrecken sich in der Mitte der Modulkörper 21 von deren Unterseite nach unten und weisen einen symmetrischen, hier trapezförmigen Querschnitt auf, so dass das modulare Förderband 1 senkrecht zu den Querrippen 24 ebenso gut vor- wie rückwärts bewegt werden kann.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

### Figur 2

Das dargestellte Antriebszahnrad 4 umfasst einen oktagonalen, mit vier ovalen Löchern 45 versehenen Radkörper 44, in dessen Mitte eine Nabe 46 mit einer im wesentlichen quadratischen Öffnung 47 angeordnet ist, die an einer quadratischen Welle befestigt wird. Der Radkörper 44 ist im äusseren Bereich 442 wesentlich breiter ausgebildet als im inneren Bereich 441 und formt an seinem Aussenumfang acht ebene Flächen 43, auf denen jeweils zwei Zähne 41, 42 angeordnet sind. Die beiden auf einer Fläche 43 angeordneten Zähne 41, 42 haben jeweils die gleiche Form, sind aber um 180° gegeneinander verdreht. Die in Drehrichtung des Antriebszahnrads 4 einander abgewandten Enden der beiden Zähne 41, 42 erstrecken sich jeweils bis zum Rand der ebenen Fläche 43.

Die Zähne 41, 42 sind in zwei Serien derart über den Umfang des Antriebszahnrads 4 verteilt, dass beim Antreiben des modularen Förderbands 1 dessen Querrippen 24 jeweils zwischen einen Zahn 41 der einen Serie und einen Zahn 42 der anderen Serie zu liegen kommen und ein Antreiben in beiden Drehrichtungen des Antriebszahnrads 4 möglich ist. Die Zähne 41 der einen Serie und die Zähne 42 der anderen Serie sind zueinander seitlich versetzt angeordnet.

### Figuren 3 bis 5

Zum Antreiben des modularen Förderbands 1, das aus einer Vielzahl von mittels Gelenkstäben 3 aneinandergelenkten Modulen 2 besteht, werden üblicherweise mehrere auf einer Welle beabstandet zueinander angeordnete Antriebszahnräder 4 verwendet, wobei hier nur eines sichtbar ist. Es ist deutlich erkennbar, dass die Querrippen 24 der angetriebenen Module 2 sich jeweils zwischen einem Zahn 41 der einen Serie und einem Zahn 42 der anderen Serie befinden, wobei je nach Drehrichtung der Zahn 41 oder der Zahn 42 die entsprechende Querrippe 24 nach vorne stösst.

Die von den Querrippen 24 abgewandten Enden der Zähne 41, 42 erstrecken sich jeweils zwischen zwei benachbarte Gelenkaugenelemente 22, 23 eines Moduls 2, so dass die Zähne 41, 42 beim Antreiben des Förderbands 1 jeweils zwischen zwei benachbarte Gelenkaugenelemente 22, 23 eines Moduls 2 und gleichzeitig zwischen die Querrippe 24 dieses Moduls 2 und das ebenfalls zwischen diese beiden benachbarten Gelenkaugenelemente 22, 23 greifende Gelenkaugenelement 23, 22 des angelenkten Moduls 2 greifen. Die Seitenflächen der Zähne 41, 42 dienen als Führungsflächen für die Seitenflächen der Gelenkaugenelemente 22, 23, da die Module 2 nur soweit seitlich verschoben werden können, bis die Seitenflächen der Gelenkaugenelemente 22, 23 an den Seitenflächen der Zähne 41, 42 anliegen.

### Figur 6

Das modulare Förderband 101 gemäss dem dargestellten zweiten Ausführungsbeispiel setzt sich aus ineinandergreifenden Modulen 102 zusammen, die mittels Gelenkstäben 103 aneinandergelenkt sind. Jedes Modul 102 weist einen Modulkörper 121 sowie eine erste und zweite Serie von Gelenkaugenelementen 122, 123 auf, die von zwei gegenüberliegenden Seiten des Modulkörpers 121 vorstehen und jeweils ein Gelenkauge 126, 127 in Form eines Langlochs umfassen. Ein Teil der Gelenkaugenelemente 122, 123 erstreckt sich jeweils direkt an der Unterseite des Modulkörpers 121. Die Gelenkaugen 126, 127 jeder der beiden Gelenkaugenelementserien 122, 123 sind aufeinander ausgerichtet und ungefähr in einem Winkel von 45° zur Förderfläche angeordnet, so dass der Gelenkstab 103 die Gelenkaugen 127 der einen Gelenkaugenelementserie 123 des einen Moduls 102 und die Gelenkaugen 126 der einen Gelenkaugenelementserie 122 des angelenkten Moduls 102 durchqueren kann und von den beiden Gelenkaugenelementserien 122, 123 fixiert wird. Im Unterschied zum modularen Förderband 1 weist das modulare Förderband 101 keine Querrippe auf der Unterseite des Modulkörpers 121 auf. Die Reinigungsfreundlichkeit ist damit noch weiter verbessert.

Das Antriebszahnrad 104 ist bis auf die Form der Zähne 141, 142 gleich aufgebaut wie das Antriebszahnrad 4. Da das Antreiben des Förderbands 101 hier durch Ansetzen der Zähne 141, 142 an den Gelenkaugenelementen 122, 123 erfolgt, darf zwischen den Zähnen 141, 142 und den Gelenkaugenelementen 122, 123 kein so grosses Spiel sein wie beim ersten Ausführungsbeispiel. Die Zähne 141, 142 sind daher an den einander abgewandten Enden länger ausgebildet, so dass sie beim Antreiben jeweils an dem in Förderrichtung vor ihnen liegenden Gelenkaugenelement 122, 123 anliegen. Beim dargestellten Beispiel stossen die Zähne 142 die Gelenkaugenelemente 123 und somit das Förderband 101 nach links.

Zu der vorbeschriebenen Fördereinrichtung sind weitere konstruktive Variationen realisierbar. Hier ausdrücklich erwähnt seien noch:
- Es ist auch denkbar, ein Antriebszahnrad 4; 104 mit einem runden Aussenumfang zu verwenden.
- Die Zähne 41, 42 und die Querrippen 24 können spezielle Formen aufweisen, die ein besseres gegenseitiges Abrollen ermöglichen. Dasselbe gilt für die Zähne 141, 142 und die Gelenkaugenelemente 122, 123.
- Anstatt beim zweiten Ausführungsbeispiel im Vergleich zum ersten die Zähne 141, 142 des Antriebszahnrads 104 länger zu gestalten, könnten auch die Gelenkaugenelemente 122, 123 des modularen Förderbands 101 länger ausgebildet werden.

## Patentansprüche

1. Fördereinrichtung mit einem modularen Förderband (1; 101), das aus mehreren Modulen (2; 102) zusammengesetzt ist, die jeweils einen plattenartigen Modulkörper (21; 121) sowie eine erste und zweite Serie von Gelenkaugenelementen (22, 23; 122, 123), die von zwei gegenüberliegenden Seiten des Modulkörpers (21; 121) vorstehen und jeweils ein Gelenkauge (221, 231; 126, 127) umfassen, aufweisen, wobei zwei benachbarte Module (2; 102) ineinandergreifen und durch einen Gelenkstab (3; 103), der die Gelenkaugen (221, 231; 126, 127) der einen Gelenkaugenelementserie des einen Moduls (2; 102) und die Gelenkaugen (221, 231; 126, 127) der einen Gelenkaugenelementserie des andern Moduls (2; 102) durchquert, aneinandergelenkt sind, und mit mindestens einem Antriebszahnrad (4; 104) mit Zähnen (41, 42; 141, 142) zum Antreiben des Förderbands (1; 101), wobei die Module (2; 102) und das mindestens eine Antriebszahnrad (4; 104) derart ausgebildet und angeordnet sind, dass die Zähne (41, 42; 141, 142) beim Antreiben des Förderbands (1; 101) jeweils zwischen zwei benachbarte Gelenkaugenelemente (22, 23; 122, 123) eines Moduls (2; 102) greifen, um direkte seitliche Führungen für diese beiden Gelenkaugenelemente (22, 23; 122, 123) zu bilden, **dadurch gekennzeichnet, dass** das mindestens eine Antriebszahnrad (4; 104) zwei Serien über den Umfang verteilter Zähne (41, 42; 141, 142) aufweist, wobei die Zähne (41; 141) der einen Serie und die Zähne (42; 142) der anderen Serie seitlich und in Umfangsrichtung zueinander versetzt angeordnet sind, so dass beim Antreiben des Förderbands (1; 101) bei mindestens einem Modul (2; 102) ein Zahn (42; 142) des Antriebszahnrads (4; 104) zwischen zwei benachbarte Gelenkaugenelemente (22; 122) der ersten Serie von Gelenkaugenelementen und ein anderer Zahn (41; 141) des Antriebszahnrads (4; 104) zwischen zwei benachbarte Gelenkaugenelemente (23; 123) der zweiten Serie von Gelenkaugenelementen greift.

2. Fördereinrichtung nach Anspruch 1, **dadurch gekennzeichnet, dass** auf der Unterseite der Modulkörper (21) quer zur Förderrichtung jeweils eine Querrippe (24) angeordnet ist und die Zähne (41, 42) des Antriebszahnrads (4) beim Antreiben des Förderbands (1) an diesen Querrippen (24) ansetzen.

3. Fördereinrichtung nach Anspruch 2, **dadurch gekennzeichnet, dass** beim Antreiben des Förderbands (1; 101) die Querrippen (24) jeweils zwischen einen Zahn (41; 141) der einen Serie und einen Zahn (42; 142) der anderen Serie zu liegen kommen.

4. Fördereinrichtung nach Anspruch 1, **dadurch gekennzeichnet, dass** die Zähne (141, 142) des Antriebszahnrads (104) beim Antreiben des Förderbands (101) an den Gelenkaugenelementen (122, 123) ansetzen.

5. Fördereinrichtung nach einem der Ansprüche 1 bis 4, **dadurch gekennzeichnet, dass** die Gelenkaugenelemente (22, 23; 122, 123) jeweils einen sich direkt an der Unterseite des Modulkörpers (21; 121) erstreckenden Teil aufweisen.

6. Fördereinrichtung nach einem der Ansprüche 1 bis 5, **dadurch gekennzeichnet, dass** die Unterseite der Modulkörper (21; 121) gegebenenfalls bis auf die Querrippe (24) und die sich direkt an der Unterseite des Modulkörpers (21; 121) erstreckenden Teile der Gelenkaugenelemente (22, 23; 122, 123) glatt ist.

7. Fördereinrichtung nach einem der Ansprüche 1 bis 6, **dadurch gekennzeichnet, dass** jeweils genau ein Zahn (41; 141) der einen Serie und ein Zahn (42; 142) der anderen Serie auf einer ebenen Fläche (43) angeordnet sind.

8. Fördereinrichtung nach Anspruch 7, **dadurch gekennzeichnet, dass** die in Förderrichtung einander abgewandten Enden der beiden auf einer Fläche (43) angeordneten Zähne (41, 42; 141, 142) sich bis zum Rand der Fläche (43) erstrecken.

9. Fördereinrichtung nach Anspruch 7 oder 8, **dadurch gekennzeichnet, dass** die beiden auf einer Fläche (43) angeordneten Zähne (41, 42; 141, 142) die gleiche Form haben, aber um 180° gegeneinander verdreht sind.

10. Fördereinrichtung nach einem der Ansprüche 1 bis 9, **dadurch gekennzeichnet, dass** das mindestens eine Antriebszahnrad (4; 104) mehr als zwei seitlich versetzte Serien über den Umfang verteilter Zähne (41, 42; 141, 142) aufweist.

## Claims

1. Conveying apparatus having a modular conveying belt (1; 101) which is made up of a plurality of modules (2; 102) which each have a plate-like module body (21; 121) and a first and second series of articulation-eyelet elements (22, 23; 122, 123) which project from two opposite sides of the module body (21; 121) and each comprise an articulation eyelet (221, 231; 126, 127), it being the case that two adjacent modules (2; 102) interengage and are articulated on one another by an articulation rod (3; 103) which passes through the articulation eyelets (221, 231; 126, 127) of one articulation-eyelet-element series of one module (2; 102) and the articulation eyelets (221, 231; 126, 127) of one articulation-eyelet-element series of the other module (2; 102), and having at least one toothed drive wheel (4; 104) with teeth (41, 42; 141, 142) for driving the conveying belt (1; 101), wherein the modules (2; 102) and the at least one toothed drive wheel (4; 104) are designed and arranged such that, during driving of the conveying belt (1; 101), the teeth (41, 42; 141, 142) each engage between two adjacent articulation-eyelet elements (22, 23; 122, 123) of a module (2; 102), in order to form direct lateral guides for these two articulation-eyelet elements (22, 23; 122, 123), **characterized in that** the at least one toothed drive wheel (4; 104) has two series of teeth ( 41, 42; 141, 142) distributed over the circumference, wherein the teeth (41; 141) of one series and the teeth (42; 142) of the other series are offset with respect to one another laterally and in the circumferential direction, so that during driving of the conveying belt (1; 101) at at least one module (2; 102) a tooth (42; 142) of the toothed drive wheel (4; 104) engages between two adjacent articulation-eyelet elements (22; 122) of the first series of articulation-eyelet elements and another tooth (41; 141) of the toothed drive wheel (4; 104) engages between two adjacent articulation-eyelet elements (23; 123) of the second series of articulation-eyelet elements.

2. Conveying apparatus according to Claim 1, **characterized in that** in each case one transverse rib (24) is arranged on the underside of the module bodies (21), transversely to the conveying direction, and, during driving of the conveying belt (1), the teeth (41, 42) of the toothed drive wheel (4) are positioned against said transverse ribs (24).

3. Conveying apparatus according to Claim 2, **characterized in that**, during driving of the conveying belt (1; 101), the transverse ribs (24) each end up between one tooth (41; 141) of one series and one tooth (42; 142) of the other series.

4. Conveying apparatus according to Claim 1, **characterized in that**, during driving of the conveying belt (101), the teeth (141, 142) of the toothed drive wheel (104) are positioned against the articulation-eyelet elements (122, 123).

5. Conveying apparatus according to one of Claims 1 to 4, **characterized in that** the articulation-eyelet elements (22, 23; 122, 123) each have a part extending directly on the underside of the module body (21; 121).

6. Conveying apparatus according to one of Claims 1 to 5, **characterized in that** the underside of the module bodies (21; 121) is smooth, if appropriate, apart from the transverse rib (24) and those parts of the articulation-eyelet elements (22, 23; 122, 123) which extend directly on the underside of the module body (21; 121).

7. Conveying apparatus according to one of Claims 1 to 6, **characterized in that** in each case precisely one tooth (41; 141) of one series and one tooth (42; 142) of the other series are arranged on a planar surface (43).

8. Conveying apparatus according to Claim 7, **characterized in that** those ends of the two teeth (41, 42; 141, 142) arranged on a surface (43), which are directed away from one another in the conveying direction, extend as far as the border of the surface (43).

9. Conveying apparatus according to Claim 7 or 8, **characterized in that** the two teeth (41, 42; 141, 142) arranged on a surface (43) are of the same shape, but have been rotated through 180° with respect to one another.

10. Conveying apparatus according to one of Claims 1 to 9, **characterized in that** the at least one toothed drive wheel (4; 104) has more than two laterally offset series of teeth (41, 42; 141, 142) distributed over the circumference.

## Revendications

1. Dispositif de transport avec un convoyeur à bande modulaire (1; 101), qui est composé de plusieurs modules (2; 102) qui présentent chacun un corps de module en forme de plateau (21; 121) ainsi qu'une première et une deuxième série d'éléments d'oeillets d'articulation (22, 23; 122, 123), qui sont en saillie sur deux côtés opposés du corps de module (21; 121) et qui comprennent chaque fois un oeillet d'articulation (221, 231; 126, 127), dans lequel deux modules adjacents (2; 102) sont en prise l'un avec l'autre et sont articulés l'un à l'autre par une barre d'articulation (3; 103), qui traverse les oeillets d'articulation (221, 231; 126, 127) de l'une des séries d'éléments d'oeillets d'articulation de l'un des modules (2; 102) et les oeillets d'articulation (221, 231; 126, 127) de l'une des séries d'éléments d'oeillets d'articulation de l'autre module (2; 102), et avec au moins une roue dentée d'entraînement (4; 104) avec des dents (41, 42; 141, 142) pour entraîner le convoyeur à bande (1; 101), dans lequel les modules (2; 102) et la au moins une roue dentée d'entraînement (4; 104) sont configurés et disposés de telle façon que les dents (41, 42; 141, 142) s'engagent chaque fois entre deux éléments d'oeillets d'articulation adjacents (22, 23; 122, 123) d'un module (2; 102) lors de l'entraînement du convoyeur à bande (1; 101), afin de former des guides latéraux directs pour ces deux éléments d'oeillets d'articulation (22, 23; 122, 123), **caractérisé en ce que** la au moins une roue dentée d'entraînement (4; 104) présente deux séries de dents (41, 42; 141, 142) réparties sur la périphérie, les dents (41; 141) de l'une des séries et les dents (42; 142) de l'autre série étant disposées de façon décalée les unes par rapport aux autres latéralement et dans le sens périphérique, de telle façon que, lors de l'entraînement du convoyeur à bande (1; 101), dans au moins un module (2; 102) une dent (42; 142) de la roue dentée d'entraînement (4; 104) s'engage entre deux éléments d'oeillets d'articulation adjacents (22; 122) de la première série d'éléments d'oeillets d'articulation et qu'une autre dent (41; 141) de la roue dentée d'entraînement (4; 104) s'engage entre deux éléments d'oeillets d'articulation adjacents (23; 123) de la deuxième série d'éléments d'oeillets d'articulation.

2. Dispositif de transport selon la revendication 1, **caractérisé en ce qu'**une nervure transversale (24) est chaque fois disposée sur la face inférieure des corps de module (21) transversalement à la direction de transport et les dents (41, 42) de la roue dentée entraînée (4) accrochent ces nervures transversales (24) lors de l'entraînement du convoyeur à bande (1).

3. Dispositif de transport selon la revendication 2, **caractérisé en ce que**, lors de l'entraînement du convoyeur à bande (1; 101), les nervures transversales (24) viennent chaque fois se placer entre une dent (41; 141) d'une série et une dent (42; 142) de l'autre série.

4. Dispositif de transport selon la revendication 1, **caractérisé en ce que** les dents (141, 142) de la roue dentée d'entraînement (104) accrochent les éléments d'oeillets d'articulation (122, 123) lors de l'entraînement du convoyeur à bande (101).

5. Dispositif de transport selon l'une quelconque des revendications 1 à 4, **caractérisé en ce que** les éléments d'oeillets d'articulation (22, 23; 122, 123) présentent chaque fois une partie s'étendant directement sur la face inférieure du corps de module (21; 121).

6. Dispositif de transport selon l'une quelconque des revendications 1 à 5, **caractérisé en ce que** la face inférieure des corps de module (21; 121) est lisse, le cas échéant à l'exception de la nervure transversale (24) et des parties des éléments d'oeillets d'articulation (22, 23; 122, 123) s'étendant directement sur la face inférieure du corps de module (21; 121).

7. Dispositif de transport selon l'une quelconque des revendications 1 à 6, **caractérisé en ce qu'**à chaque fois exactement une dent (41; 141) de l'une des séries et une dent (42; 142) de l'autre série sont disposées exactement sur une face plane (43).

8. Dispositif de transport selon la revendication 7, **caractérisé en ce que** les extrémités situées à l'opposé l'une de l'autre dans la direction de transport des deux dents (41, 42; 141, 142) disposées sur une face (43) s'étendent jusqu'au bord de la face (43).

9. Dispositif de transport selon la revendication 7 ou 8, **caractérisé en ce que** les deux dents (41, 42; 141, 142) disposées sur une face (43) ont la même forme, mais sont tournées de 180° l'une par rapport à l'autre.

10. Dispositif de transport selon l'une quelconque des revendications 1 à 9, **caractérisé en ce que** la au moins une roue dentée d'entraînement (4; 104) présente plus de deux séries décalées latéralement de dents (41, 42; 141, 142) réparties sur la périphérie.
